Europäisches Patentamt

European Patent Office

Office européen des brevets

(19)

(11) Numéro de publication : **0 234 981 B1**

# (12) FASCICULE DE BREVET EUROPEEN

(45) Date de publication du fascicule du brevet :
**22.04.92 Bulletin 92/17**

(51) Int. Cl.$^5$ : **G02B 6/28**

(21) Numéro de dépôt : **87400113.4**

(22) Date de dépôt : **19.01.87**

(54) **Coupleur optique en Té perfectionné pour des applications à des réseaux optiques en bus et bus optique muni d'une pluralité de tels coupleurs.**

(30) Priorité : **21.01.86 FR 8600778**

(43) Date de publication de la demande :
**02.09.87 Bulletin 87/36**

(45) Mention de la délivrance du brevet :
**22.04.92 Bulletin 92/17**

(84) Etats contractants désignés :
**DE GB NL**

(56) Documents cités :
**EP-A- 0 202 063
FR-A- 2 525 777
US-A- 4 176 908
PATENT ABSTRACTS OF JAPAN, vol. 1, no. 129 (E-77), 25 octobre 1977, page 5861 E 77; & JP-A-52 64 939
PATENT ABSTRACTS OF JAPAN, vol. 8, no. 10 (P-248)[1447], 18 janvier 1984; & JP-A-58 171 019
ELEKTRONIK, vol. 30, no. 4, 27 février 1981, pages 63-70, Munich, DE; H.H. WITTE: "Optische Datenbusse für Mess- und Regelaufgaben"**

(73) Titulaire : **ETAT FRANCAIS représenté par le Ministre des PTT (Centre National d'Etudes des Télécommunications)
38-40 rue du Général Leclerc
F-92131 Issy-les-Moulineaux (FR)**

(72) Inventeur : **Treheux, Michel
Antri-Breud Rue des Iles Ile Grande
F-22670 Pleumeur-Bodou (FR)**
Inventeur : **Bolusset, Christian
Kerlessanouet
F-22700 Perros-Guirec (FR)**
Inventeur : **Le Saout, Jean-Yves
Le Beg-Hent Servel
F-22300 Lannion (FR)**

(74) Mandataire : **Martin, Jean-Jacques et al
Cabinet REGIMBEAU 26, Avenue Kléber
F-75116 Paris (FR)**

EP 0 234 981 B1

# Description

La présente invention concerne un coupleur optique passif en Té pour fibres optiques, adapté pour dériver une information optique guidée par une fibre optique principale vers un élément auxiliaire tel qu'une fibre optique auxiliaire ou un organe récepteur auxiliaire.

La présente invention concerne plus précisément les coupleurs optiques en Té du type comprenant :

– une fibre optique principale qui possède une encoche généralement perpendiculaire à son axe et laquelle encoche présente au moins une surface inclinée par rapport à un plan perpendiculaire à cet axe, et

– un élément optique auxiliaire comportant une extrémité en coin dont la forme lui permet de venir se loger dans l'encoche, l'une des surfaces de l'extrémité en coin étant conçue de manière à permettre la dérivation d'une partie de l'information optique guidée dans la fibre optique principale vers cet élément auxiliaire.

Un coupleur optique du type indiqué ci-dessus est décrit par exemple dans le document EP-A-0202063.

La présente invention trouve notamment application dans la conception de réseaux optiques en bus.

Les coupleurs optiques passifs en Té du type précité jusqu'ici proposés présentent l'inconvénient d'induire une perte de lumière non négligeable même s'ils ne sont pas réliés à l'élément auxiliaire précité (formant poste récepteur).

Cette perte résulte de la dérivation imposée au niveau de chaque coupleur, et quelle que soit l'exploitation de l'information dérivée, c'est-à-dire que cette information soit récupérée au non par un élément auxiliaire.

Cet inconvénient est très important lorsqu'il s'agit de concevoir des réseaux optiques présentant un grand nombre de ramifications, comme cela sera de plus en plus souvent le cas dans l'avenir, compte-tenu des développements actuels des fibres optiques.

Les inventeurs ont posé le problème d'éliminer l'inconvénient précité et de proposer un nouveau coupleur optique qui n'induise pas de perte d'énergie lorsqu'aucun élément auxiliaire n'est connecté au coupleur.

Le nouveau coupleur optique proposé pour résoudre le problème ainsi posé, du type indiqué précédemment, est caractérisé par le fait qu'il comprend :

– un bouchon complémentaire de l'encoche qui remplit totalement l'encoche et réalisé dans un matériau dont les caractéristiques optiques sont au moins très proches de celles de la fibre optique principale pour reconstituer la fibre optique principale afin d'assurer le guidage de l'information optique dans celle-ci.

– des moyens supports associés à la fibre optique et adaptés pour recevoir ledit élément optique auxiliaire ou ledit bouchon.

Cette structure permet de disposer de coupleurs optiques qui présentent la même souplesse d'utilisation que les prises de courant électriques classiques.

En effet, dans la mesure où les nouveaux coupleurs optiques ainsi proposés n'induisent pas de porte d'énergie lorsqu'aucun élément auxiliaire ne leur est connecté, ces coupleurs permettent de multiplier, sans crainte de perturbations et sans changer les caractéristiques du système, le nombre de ramifications ou de dérivation du réseau, de façon comparable aux réseaux électriques.

Cette propriété est particulièrement intéressante dans le cas d'un bus optique d'appartement où il n'y a pas en général d'utilisation simultanée d'un grand nombre d'appareils mais où par contre la localisation de ces appareils peut être très variable non seulement entre deux appartements de même type, mais aussi au cours du temps dans un même appartement.

Les moyens de dérivation d'une partie de l'information vers l'élément optique auxiliaire peuvent faire l'objet de diverses variantes de réalisation.

Selon une première variante de réalisation, pour permettre la dérivation d'une partie de l'information optique guidée, au moins une surface de l'extrémité en coin de l'élément optique auxiliaire est revêtue d'un matériau réfléchissant ou partiellement réfléchissant.

Selon une seconde variante de réalisation, pour permettre la dérivation d'une partie de l'information optique guidée, l'une des surfaces de l'extrémité en coin de l'élément optique auxiliaire est dimensionnée de telle sorte qu'après logement de cette extrémité en coin dans l'encoche, un espace rempli d'air ou d'une autre matière d'indice faible existe entre ladite surface d'extrémité et la surface en vis à vis de l'encoche.

Le domaine des fibres vise principalement par la présente invention est celui des fibres polymères à gros coeur (600μm et au-delà) néanmoins, la présente invention n'est pas limitée à ce type particulier de fibres et s'étend en particulier aux fibres optiques classiques en silice.

Il est avantageux de réaliser le bouchon dans le même matériau que la fibre optique principale.

Ainsi, selon une caractéristique avantageuse de la présente invention, l'élément auxiliaire et le bouchon sont réalisés dans une fibre identique à la fibre optique principale, c'est-à-dire présentant le même indice de coeur, le même indice de gaine et le même diamètre.

Selon l'invention, l'angle d'ouverture de l'encoche réalisée dans la fibre optique principale est avantageusement de l'ordre de 80° à 90°.

Pour éliminer l'interface d'air nu niveau de l'assemblage encoche/élément auxiliaire ou encoche/ bouchon il s'avère avantageux que, avant engagement, l'angle d'ouverture de l'encoche soit inférieur à l'angle au sommet de la portion complémentaire de l'élément auxiliaire ou du bouchon.

Ainsi, selon une caractéristique avantageuse de la présente invention, avant engagement, l'angle d'ouverture de l'encoche est de l'ordre de 80°, tandis que l'angle au sommet de la portion complémentaire de l'élément auxiliaire ou du bouchon est de l'ordre de 90°.

Pour permettre d'injecter un signal dans la fibre optique principale, à partir de l'élément optique auxiliaire, et ce dans la même direction que le signal aller principal introduit dans la fibre optique principale, selon la présente invention, l'extrémité en forme de coin de l'élément auxiliaire complémentaire de l'encoche est avantageusement munie sur ses deux faces de revêtement réfléchissants ou semi-réfléchissants présentant des catactéristiques optiques différentes.

Des essais établis par les inventeurs ont montré qu'il est avantageux de réaliser une encoche dont la profondeur est inférieure à 0,4 mm.

Selon une première variante conforme à la présente invention, l'encoche est réalisée dans la fibre optique principale par enlèvement d'un élément de matière en forme de coin à l'aide d'un outil d'usinage, tel que lime, meule ou couteau.

Selon une seconde variante, l'encoche précitée est réalisée selon la séquence d'étapes consistant à :

i) enrober la fibre optique principale dans un manchon présentant au moins une surface extérieure de référence,

ii) sectionner la fibre optique principale selon deux plans inclinés de 45° par rapport à son axe longitudinal , et symétriques par rapport à un plan transversal perpendiculaire à cet axe,

iii) sectionner transversalement et à une distance égale choisie les extrémités effilées des deux portions de fibres optiques principales ainsi obtenues, puis

iv) mettre bout à bout ces deux portions de fibres en accolant les plans de coupe résultant du sectionnement obtenu à l'étape iii) et en disposant en regard les plans de coupe résultant des sectionnements obtenus à l'étape ii).

Le bouchon précité apte à coopérer avec la fibre optique principale pour reconstituer celle-ci afin d'assurer le guidage de l'information optique dans ladite fibre optique principale peut faire l'objet de différents modes de réalisation.

Le cas échéant, une goutte de liquide adaptateur d'indice est de plus introduite dans l'encoche.

Selon un premier mode de réalisation, le bouchon est réalisé en résine optique, par exemple par moulage.

Selon un second mode de réalisation conforme à la présente invention, le bouchon est taillé dans une fibre optique plastique.

Selon un troisième mode de réalisation, le bouchon est en matériau élastomère et taillé ou moulé.

Afin d'améliorer le guidage de l'information optique dans la fibre optique principale grâce au bouchon, celui-ci peut être muni d'une surface réfléchissante sur l'extérieur de l'encoche.

Les moyens supports du coupleur optique conforme à la présente invention sont également susceptibles de différentes variantes de réalisation.

Selon une première variante, ces moyens supports comprennent une embase munie d'un logement apte à recevoir les fibres optiques principales, et un embout qui recoit l'élément optique auxiliaire ou le bouchon et est adapté pour être fixé sur l'embase.

De préférence, la fibre optique auxiliaire ou le bouchon est alors libre de rotation par rapport à l'embout, et cet embout est adapté pour être assemblé par filetage sur l'embase.

De préférence, les moyens supports, selon la présente invention, comportent un ressort sollicitant l'extrémité en coin de l'élément auxiliaire ou du bouchon vers le fond de l'encoche.

Selon une autre variante de réalisation ces moyens supports comprennent une embase munie de deux rainures transversales débouchant sur une surface commune, la première rainure recevant la fibre optique principale, la seconde rainure coïncidant avec l'encoche, et un couvercle adapté pour être fixé sur l'embase et immobiliser l'extrémité en coin de l'élément optique auxiliaire ou du bouchon dans l'encoche.

Le couvercle possède alors le préférence une moulure en V destinée à pénétrer dans la seconde rainure de l'embase pour guider l'extrémité en coin de l'élément optique auxiliaire ou du bouchon dans l'encoche.

Par ailleurs, selon une caractéristique avantageuse de la présente invention, l'embase et le couvercle sont formés d'une pièce en étant reliés par des languettes d'articulation.

La présente invention concerne également les bus optiques équipés d'une pluralité de coupleurs optiques du type précité.

D'autres caractéristiques et avantages de la présente invention apparaîtront à la lecture de la description détaillée qui va suivre et en regard des dessins annexés, donnés à titre d'exemples non limitatifs et sur lesquels :

– la figure 1 illustre de façon schématique la coopération d'une fibre optique principale et d'une fibre optique auxiliaire, dans le cadre d'un coupleur optique conforme à la présente invention,

– la figure 2 illustre la coopération d'une fibre optique principale et d'un bouchon complémentaire de l'encoche réalisée dans celle-ci, dans le cadre du coupleur optique conforme à la présente invention,

– les figures 3A et 3B illustrent deux variantes du cheminement d'un signal introduit à partir d'une fibre optique auxiliaire dans la fibre optique principale,

– les figures 4A à 4C illustrent diverses étapes d'un processus d'usinage de l'encoche dans une fibre optique principale pour la réalisation d'un coupleur optique conforme à la présente invention,

– la figure 5 représente schématiquement la fibre optique principale munie d'une encoche ainsi obtenue et la coopération de cette fibre optique principale avec un bouchon complémentaire de l'encoche,

– la figure 6 illustre la coopération de la même fibre optique principale munie d'une encoche avec une fibre optique auxiliaire,

– les figures 7A et 7B illustrent deux étapes du processus d'usinage de l'extrémité en coin d'une fibre optique auxiliaire,

– les figures 7C et 7D représentent deux vues respectivement orthogonales de l'extrémité en coin de la fibre optique auxiliaire ainsi obtenue,

– les figures 8A et 8B représentent schématiquement deux vues en coupe axiale d'un coupleur optique conforme à la présente invention incorporant l'un une fibre optique auxiliaire pour la dérivation d'une partie du signal introduit dans la fibre optique principale, et incorporant l'autre un bouchon pour la reconstitution de la fibre optique principale afin d'assurer le guidage de l'information optique dans celle-ci,

– la figure 9 représente une vue schématique en perspective et en vue éclatée d'une autre variante de réalisation des moyens supports d'un coupleur optique conforme à la présente invention,

– la figure 10 représente une vue de dessus de l'embase de ces moyens supports,

– la figure 11 représente une demi-vue gauche latérale extérieure et une demi-vue droite en coupe axiale selon le plan de coupe référencé XI sur la figure 10 de la même embase ,

– la figure 12 représente une vue latérale extérieure de la même embase selon une vue référencée XII sur la figure 10 et orthogonale à l'angle d'observation de la demi-vue gauche de la figure 11,

– la figure 13 représente une vue en coupe axiale d'un coupleur optique conforme à la présente invention utilisant les moyens supports représentés sur les figures 9, 10, 11 et 12, selon un plan de coupe référencé XIII-XIII sur la figure 10,

– la figure 14 représente une vue de dessus d'un couvercle apte à coopérer avec l'embase représentée sur les figures 10, 11 et 12,

– la figure 15 représente une vue d'un embout supportant l'élément optique auxiliaire ou le bouchon, apte à coopérer avec l'embase représentée sur les figures 10, 11 et 12 ; plus précisément la figure 15 représente uen demi-vue gauche latérale extérieure de cet embout et une demi-vue droite en coupe axiale longitudinale du même embout,

– la figure 16A représente une vue schématique en perspective d'une autre variante de réalisation des moyens supports intervenant dans la conception du coupleur optique conforme à la présente invention, et

– la figure 16B représente une vue du coupleur optique après assemblage des moyens supports recevant la fibre optique principale et avant engagement de la fibre optique auxiliaire,

– la figure 17 représente une vue schématique d'un bus optique conforme à la présente invention.

Comme cala est représenté sur les figures annexées, le coupleur optique conforme à la présente invention comprend pour l'essentiel trois pièces, à savoir : une fibre optique principale 100, une fibre auxiliaire 200 et un bouchon 300, complétées par des moyens support 400 de ces pièces.

On va tout d'abord décrire des coupleurs optiques dans lesquels au moins une surface de l'extrémité au coin de l'élément optique auxiliaire est revêtue d'un matériau réfléchissant ou partiellement réfléchissant, conformément à la première variante précitée des moyens de dérivation.

La fibre optique principale 100 possède une encoche latérale 102 généralement perpendiculaire à son axe 110.

L'encoche 102 présente au moins une surface inclinée par rapport à un plan perpendiculaire à cet axe 110.

Plus précisément encore, de préférence, l'encoche 102 est délimitée par deux plans 104, 106 inclinés entre eux d'environ 90° et inclinés par rapport à l'axe 110 de la fibre optique principale d'environ 45°.

L'élément optique auxiliaire, de préférence une fibre auxiliaire 200,comporte une extrémité 202 en coin complémentaire de l'encoche 102.

Cette extrémité en coin 202 de la fibre optique auxiliaire 200 est délimitée par deux plans 204 , 206 sensiblement perpendiculaires entre eux et inclinés de 45° par rapport à l'axe 210 de la fibre optique auxiliaire. Le sommet 203 de cette extrémité en coin 202 est de préférence sécant de l'axe 210.

L'une au moins des surfaces 204, 206 de l'extrémité en coin 202 de la fibre optique auxiliaire est munie d'un revêtement en un matériau réfléchissant ou semi-réfléchissant pour dériver une partie de l'information optique guidée dans la fibre optique principale 100 vers l'élément optique auxiliaire 200.

La pièce 300 dénommée bouchon est formée quant à elle d'un coin complémentaire de l'encoche 102.

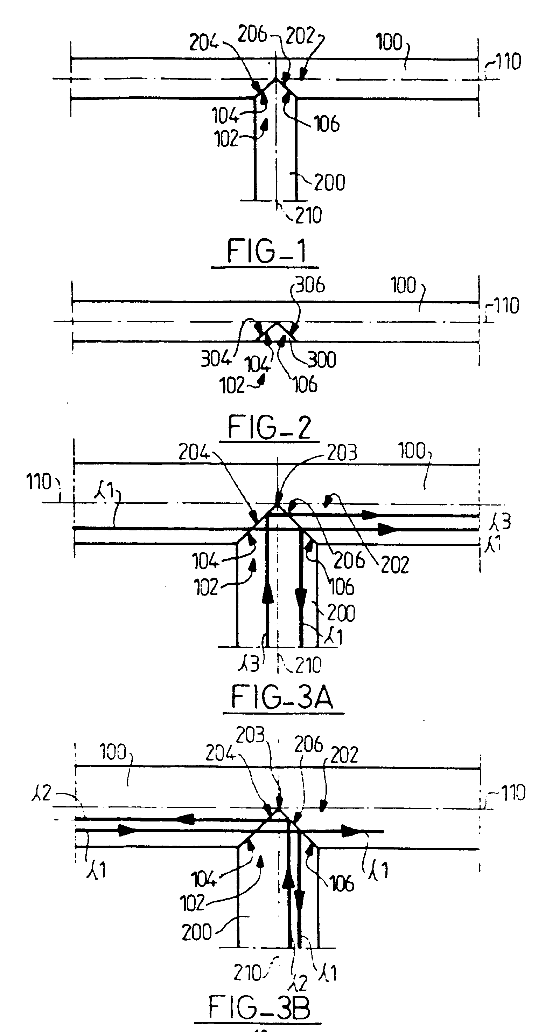

Ce bouchon 300 est réalisé dans un matériau dont les caractéristiques optiques sont au moins très proches de celles de la fibre optique principale 100 pour reconstituer la fibre optique principale afin d'assurer le guidage de l'information optique dans celle-ci, lorsque le coin est introduit dans l'encoche comme représenté par exemple sur la figure 2.

Ainsi, selon la présente invention, comme cela est représenté sur la figure 1, on peut coupler la fibre principale 100 et la fibre optique auxiliaire 200 en introduisant l'extrémité en coin 202 dans l'encoche 102. On forme alors une dérivation en Té qui permet, de façon classique en soi, de prélever une partie de l'énergie véhiculée dans la fibre principale 100 et de dévier celle-ci vers la fibre auxiliaire 200.

Cette dérivation est obtenue grâce au revêtement de matériau réfléchissant ou partiellement réfléchissant prévu sur l'une des surfaces 204,206 du coin 202.

Par ailleurs, comme cela est représenté sur la figure 2, on peut aussi coupler la fibre optique principale 100 et le bouchon 300 en introduisant celui-ci dans l'encoche 102.

Dans ce cas, toute l'énergie véhiculée reste dans la fibre optique principale 100.

Pour ce faire, le bouchon 300, de façon comparable à l'extrémité en coin de la fibre auxiliaire 200 est formé à partir d'un cylindre présentant le même diamètre que la fibre optique principale 100 et à l'extrémité duquel sont ménagés deux plans 304, 306 inclinés entre eux d'environ 90° et inclinés d'environ 45° par rapport à l'axe dudit cylindre.

Les plans 204, 206 de l'extrémité en coin de la fibre optique auxiliaire et les plans 304 et 306 du bouchon 300 sont destinés à venir respectivement en appui contre les plans 104 et 106 de l'encoche 102.

On a représenté sur la figure 3B une variante de réalisation du coupleur optique conforme à la présente invention selon laquelle la surface 206 de l'extrémité en forme de coin de la fibre optique auxiliaire 200 est munie d'un revêtement semi-réfléchissant pour une longueur d'onde $\lambda_1$.

La seconde surface 204 de l'extrémité en coin de la fibre optique auxiliaire est par contre dépourvue d'un tel revêtement.

Ainsi, il n'y a pas de changement d'indice entre les surfaces 104 de la fibre optique principale et 204 de la fibre optique auxiliaire, d'où des pertes de Fresnel en entrée très réduites.

La couche de revêtement déposée sur la surface 206 de l'extrémité en coin de la fibre optique auxiliaire 200 est partiellement réfléchissante pour une longueur d'onde $\lambda_1$ et réfléchissante pour une seconde longueur d'onde $\lambda_2$.

Ainsi, de façon classique en soi, et comme cela apparaît notamment à l'examen de la figure 3B, le rayonnement de longueur d'onde $\lambda_1$ introduit dans la fibre optique principale 100 par l'extrémité de celle-ci la plus éloignée de ladite surface 206 revêtue sera en partie déviée vers la fibre optique auxiliaire 200.

Par contre, un rayonnement de longueur d'onde $\lambda_2$ introduit dans la fibre optique auxiliaire 200 et dirigé vers ladite surface revêtue 206 sera renvoyé intégralement par réflexion dans la fibre optique principale 100, parallèlement à l'axe de celle-ci, et dans la direction inverse du signal aller de longueur d'onde $\lambda_1$.

On a par contre représenté sur la figure 3A une variante de réalisation dans laquelle les deux surfaces 204 et 206 de l'extrémité en coin de la fibre optique auxiliaire 200 sont munies d'un revêtement.

Le revêtement prévu sur la première surface 204 est transparent pour la longueur d'onde $\lambda_1$ et réfléchissant pour une longueur d'onde $\lambda_3$.

Le revêtement prévu sur la seconde surface 206 est partiellement transparent pour la longueur d'onde $\lambda_1$ précitée et transparent pour la longueur d'onde $\lambda_3$ précitée.

En conséquence, le rayonnement de longueur d'onde $\lambda_1$ introduit dans la fibre optique principale 100 par l'extrémité de celle-ci la plus éloignée de la surface 206 sera partiellement réfléchi dans la fibre optique auxiliaire 200 grâce au revêtement ménagé sur la surface 206. Par contre, un rayonnement de longueur d'onde $\lambda_3$ introduit dans la fibre optique auxiliaire 200 et rencontrant le revêtement prévu sur la première surface 204 de l'extrémité en coin de la fibre optique auxiliaire sera renvoyé par le revêtement prévu sur cette surface, dans la fibre optique principale 100, parallèlement à son axe, et dans la direction du rayonnement aller de longueur d'onde $\lambda_1$.

Bien entendu, les revêtements réfléchissants ou semi-réfléchissants précités peuvent être prévus sur une partie seulement des faces 204 et/ou 206 de l'extrémité en coin de la fibre optique auxiliaire 200.

Le coefficient de couplage peut être réglé non seulement grâce aux valeurs des couches multi-diélectriques déposées sur les surfaces 204, 206, mais également en faisant varier la forme (en particulier l'angle d'ouverture de l'encoche et l'inclinaison de l'axe 210 de la fibre optique auxiliaire par rapport à l'axe 110 de la fibre optique principale 100) et la profondeur de l'encoche 102.

Diverses techniques de fabrication de l'encoche 102 dans la fibre optique principale et de l'extrémité en coin 202 de la fibre optique auxiliaire ou du bouchon 300 seront décrites par la suite.

On notera néanmoins que dans le cadre de ladite première variante de réalisation des moyens de dérivation selon laquelle il est prévu un revêtement réfléchissant ou partiellement réfléchissant sur l'une au moins des surfaces de l'extrémité en coin de l'élément optique auxiliaire, il est important d'obtenir un état de surface optimum au niveau des surfaces 104, 106, 204, 206, 304 et 306 pour éviter de piéger de l'air entre la fibre optique principale 100 et la fibre optique auxiliaire 200 ou le bouchon 300.

En effet, la présence d'air entre des couples des surfaces précitées crée deux interfaces (fibre optique principale 100 - air - fibre optique auxiliaire) qu'un rayon lumineux provenant de la fibre optique principale 100 doit traverser pour passer de la fibre optique principale 100 à l'extrémité en coin 202 de la fibre optique auxiliaire ou de la fibre optique principale dans le bouchon 300.

En d'autres termes, pour un rayon lumineux qui traverse l'encoche de part et d'autre, quatre interfaces doivent être traversées, d'où il résulte un risque évident de diffusion de la lumière vers l'extérieur.

Après différents essais, les inventeurs ont considéré qu'il était avantageux de donner à l'angle d'ouverture de l'encoche 102 (référencé $\alpha$ sur la figure 5) une valeur inférieure à l'angle au sommet de la portion complémentaire 202 de l'élément optique auxiliaire 200 ou du bouchon 300.

Cette disposition permet en effet de réduire l'interface d'air entre les couples de surface 104,106 d'une part et 204,206,304 et 306 d'autre part, par pression sur la fibre optique auxiliaire 200 ou le bouchon 300 afin d'obtenir un contact intime entre les couples de surface précités.

Plus précisément encore, selon un mode de réalisation considéré actuellement comme donnant pleinement satisfaction, l'ouverture angulaire $\alpha$ de l'encoche 102 est de l'ordre de 80° tandis que l'angle au sommet de l'extrémité en coin de la fibre optique auxiliaire 200 et du bouchon 300 est de l'ordre de 90°.

On va maintenant décrire diverses techniques de réalisation de l'encoche 102, de l'extrémité en coin 202 et du bouchon 300.

La réalisation d'encoche dans une fibre optique, transversalement à l'axe de celui-ci est classique en soi, comme représenté par exemple dans les demandes de brevet françaises publiées sous les numéros 2 344 855 et 2 525 777.

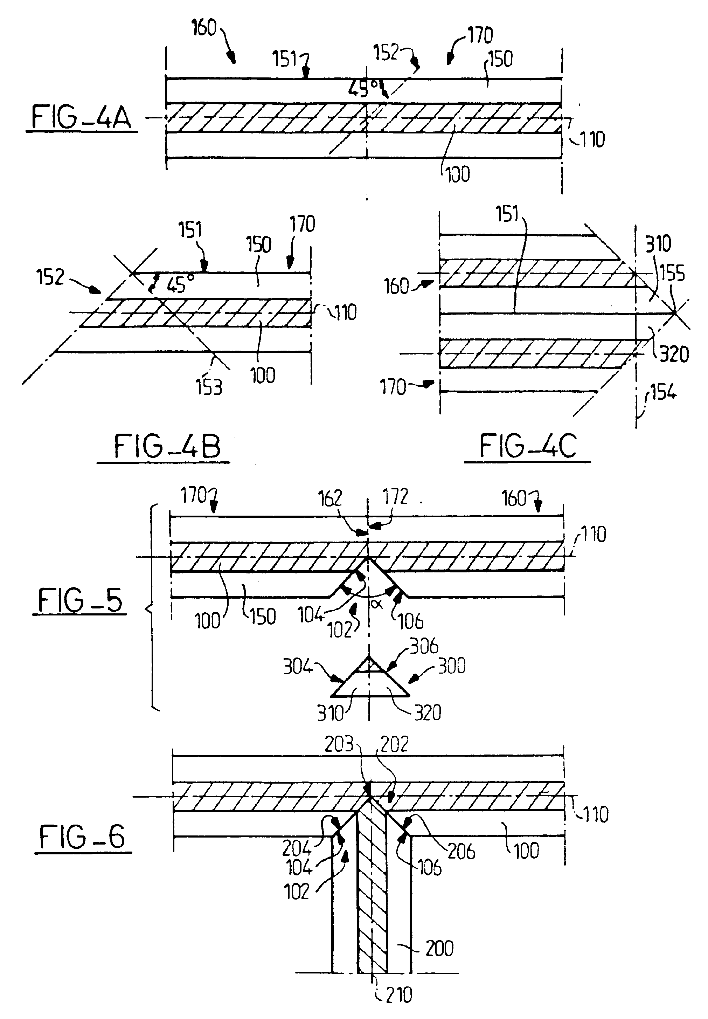

On va maintenant décrire une première variante de réalisation de l'encoche 102, en regard des figure 4A, 4B, 4C et 5.

La première étape consiste à enrober la fibre optique principale 100 dans un manchon 150 présentant au moins une surface extérieure de référence.

A titre d'exemple, la fibre optique principale 100 peut être placée à l'intérieur d'un dièdre en élastomère et parallèlement à l'arête de ce dernier; On fait alors couler de la colle entre le dièdre et la fibre 100. En séchant et en se polymérisant la colle adhère seulement à la fibre, les faces du dièdre étant avantageusement en élastomère.

La fibre se trouve alors à l'intérieur d'un manchon 150 présentant deux plans qui lui sont parallèles et qui sont perpendiculaires entre eux.

Ces faces de référence vont permettre différents sciages , de façon précise.

Selon la figure 4A, les deux faces de référence perpendiculaires entre elles, dans l'hypothèse de l'utilisation d'un dièdre précité, sont l'une perpendiculaire au plan de la figure 4A et référencée 151, l'autre parallèle au plan de cette figure 4A.

On réalise alors tout d'abord le sciage de la fibre optique principale 100 et du manchon 150, selon un plan de coupe représenté schématiquement en traits mixtes sur la figure 4A et référencé 152, qui est incliné de 45° par rapport à la face de référence 151 et perpendiculaire à la seconde face de référence, c'est-à-dire perpendiculaire au plan de la figure 4A.

On obtient alors deux portions de fibre séparées, 160 et 170, présentant l'une, une face d'extrémité inclinée de 45° par rapport à la face de référence 151, l'autre une face d'extrémité inclinée de 135° par rapport à la même face de référence 151.

Comme présenté sur la figure 4B on réalise sur la portion 170 dont la face d'extrémité est inclinée de 135° par rapport à la face de référence 151, une seconde découpe 153 inclinée de 45° par rapport à la face de référence 151 et symétrique de la découpe 152 précitée, de telle sorte que la face d'extrémité de cette portion 170 soit aussi inclinée de 45° par rapport à la face de référence 151.

Les deux portions de fibres optiques principales 160, 170 obtenues après ces opérations de sciage sont accolées suivant leur plus grande longueur, en accolant la face de référence 151 du manchon 150 de ces deux portions et en portant en coïncidence l'extrémité effilée référencée 155 de celles-ci.

On a représenté les deux portions de fibres optiques principales 160, 170 accolées sur la figure 4C.

On réalise alors une seconde opérétion de sciage transversalement à l'axe 110 de la fibre optique principale.

Le plan de coupe de ce second sectionnement est référencé 154 sur la figure 4C.

La distance séparant ce plan de coupe 154 de l'extrémité effilée 155 de la fibre optique principale 100 détermine la profondeur de l'encoche 102.

Bien entendu le sectionnement transversal au niveau du plan de coupe 154 peut être réalisé séparément sur chacune des deux portions de fibres optiques principales.

Une fois ces opérations de sectionnement opérées, il convient de mettre bout à bout les deux portions de fibres 160, 170 en accolant les plans de coupe 162, 172 résultant du sectionnement transversal 154 (figure 4C) et en disposant en regard les plans de coupe inclinés 104, 106 résultant des sectionnements inclinés 152, 153 (figures 4A, 4B) , et formant l'encoche 102 précitée (par alignement de la face de référence 151 des deux portions 160, 170).

On remarquera que la récupération des deux éléments 310, 320 séparés des portions de fibres optiques principales 160, 170 lors du sectionnement transversal 154 permet de reformer, comme illustré sur le bas de la figure 5 un bouchon 300 parfaitement complémentaire de l'encoche 102.

Bien entendu, d'autres techniques de fabrication peuvent être envisagées pour la réalisation de l'encoche 102.

Ainsi, cette encoche peut être fabriquée à l'aide de tout outil d'usinage approprié, tel que lime, meule ou couteau, le bouchon 300 étant alors réalisé à l'aide de moyens auxiliaires qui seront évoqués par la suite.

L'extrémité en coin 202 de la fibre optique auxiliaire peut être réalisée de façon similaire à la fibre optique principale 100 précitée.

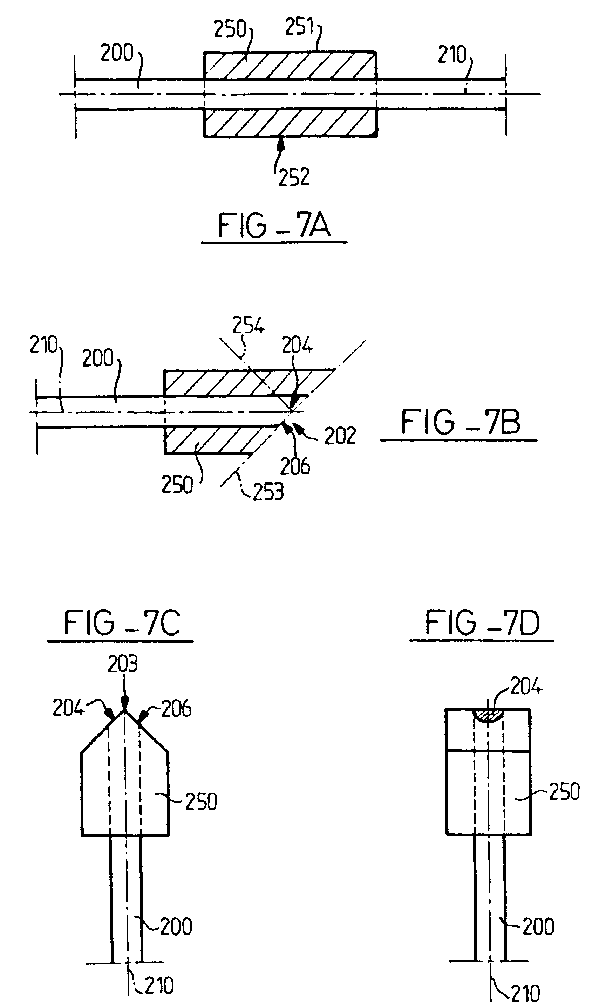

C'est-à-dire, que comme cela est représenté sur la figure 7A, la fibre optique auxiliaire 200 peut être placée dans un gabarit, par exemple un dièdre, permettant de former un manchon 250 sur la périphérie de la fibre optique auxiliaire 200.

De préférence, le gabarit est adapté pour réaliser un manchon 250 présentant deux faces de référence 251, 252 parallèles (perpendiculaires au plan de la figure 7A).

Il suffit alors de réaliser deux sectionnements 253, 254, généralement perpendiculaires entre eux et inclinés d'environ 45° par rapport à chacun des plans de référence 251 et 252 précités pour obtenir l'extrémité en coin 202 de la fibre optique auxiliaire 200 délimitée par les surfaces 204 et 206 précitées.

Le gabarit utilisé pour la réalisation des manchons 150 et 250 peut par exemple être usiné dans un bloc de polyéthylène.

Comme indiqué précédemment l'état de surface de l'extrémité en coin 202 de la fibre optique auxiliaire doit être optimum.

Pour cela, de préférence, les surfaces fonctionnelles 204 et 206 de l'extrémité en coin sont abrasées sur différents papiers de verre de grosseur de grain decroissante.

Une fois l'usinage de l'extrémité en coin 202 achevé, l'une au moins des faces de cette extrémité en coin reçoit une couche multi-diélectrique de coefficient de réflexion et de transmission adéquat.

Bien entendu, on peut également envisager de réaliser les deux faces 204 et 206 de l'extrémité en coin de la fibre optique auxiliaire en introduisant cette fibre auxiliaire dans un gabarit muni d'un alésage traversant apte à recevoir les fibres optiques auxiliaires et débouchant au milieu de l'arête de deux pans inclinés dont l'angle au sommet est égal à l'angle recherché entre les deux surfaces fonctionnelles 204 et 206 de l'extrémité en coin de la fibre optique auxiliaire.

Le bouchon 300 peut être obtenu en collant les deux éléments 310, 320 récupérés lors de la fabrication de l'encoche selon la variante de réalisation illustrée sur les figures 4A et 4B.

On peut également envisager de réaliser le bouchon 300 à l'aide de résine optique, telle que la résine EPO-TEK 301 présentant un indice de réfraction de 1,54.

Les inventeurs proposent également la réalisation de bouchon 300 taillé en pleine fibre, à l'aide d'un couteau chauffant et d'un gabarit similaire au manchon représenté sur les figures 7C et 7D (bloc muni d'un alésage qui débouche au milieu de l'arête de deux pans).

Il est bien entendu là encore nécessaire de veiller à l'état de surface du bouchon pour eliminer toute interface d'air.

Les inventeurs proposent enfin de réaliser le bouchon par moulage en élastomère.

Ce matériau s'avère particulièrement avantageux en raison de sa propriété d'élasticité.

En effet, un tel bouchon 300 en élastomère peut par pression épouser parfaitement la forme de l'encoche 102.

En l'état actuel des essais, un tel bouchon en élastomère a présenté de meilleures performances que les bouchons réalisés par reconstitution des éléments éliminés de la fibre optique principale, ou à l'aide de résine optique ou encore par taille d'une fibre optique plastique.

Néanmoins, pour éviter la diffusion de lumière dans le matériau élastomère, il est préférable de placer un revêtement réfléchissant, par exemple une feuille d'aluminium sur le bouchon 300 à l'extérieur de l'encoche 102.

Il est par ailleurs préférable de mouler les bouchons plutôt que de les tailler dans un bloc d'élastomère. La technique de moulage permet en effet d'obtenir un meilleur état de surface.

Pour éviter que de la poussière n'adhère fortement à l'élastomère, en rendant ainsi le couplage moins performant, il est bien entendu nécessaire de veiller à protéger l'ensemble du coupleur optique conforme à la présente invention contre toute pénétration de poussière.

On notera également la possibilité d'utiliser un liquide adaptateur d'indice dans l'encoche 102 de la fibre optique principale.

On va maintenant décrire les diverses variante de réalisation de moyens supports 400 représentées sur les figures annexées.

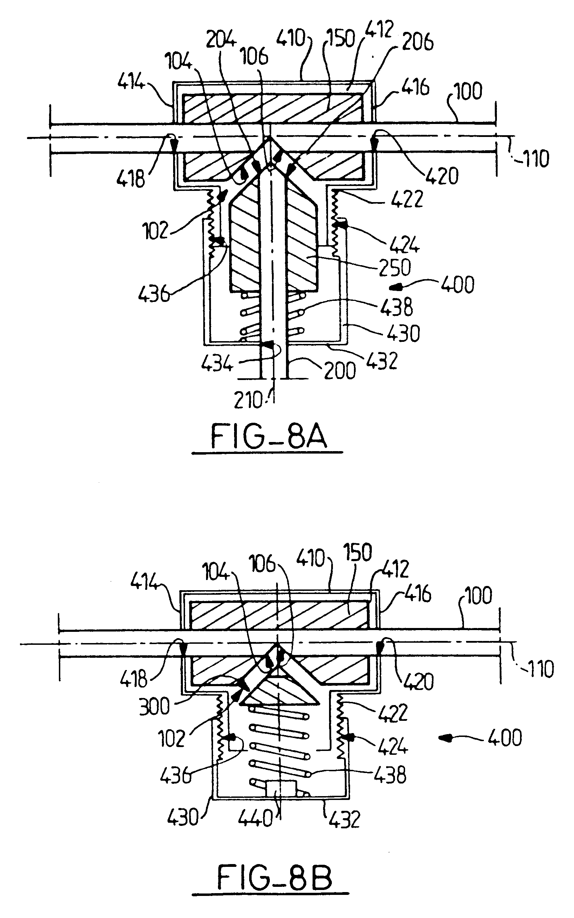

Selon la première variante de réalisation représentée sur les figures 8A et 8B, les moyens supports 400 comprennent, pour l'essentiel, une embase 410 munie d'un logement 412 apte à recevoir la fibre optique principale 100 et un embout 430 qui reçoit l'élément optique auxiliaire 200 ou le bouchon 300.

L'embase 410 est plus précisément formée d'un carter cylindrique obturé en extrémité par des cloisons transversales 414, 416 munies d'orifices coaxiaux 418, 420 permettant le passage de la fibre optique principale 100.

Le carter cylindrique 410 définit le logement 412 précité. Ce dernier est adapté pour recevoir le manchon 150 entourant la fibre optique principale 100.

Le carter cylindrique 410 est, de plus, muni d'une collerette cylindrique 422 d'extension radiale, qui débouche dans le logement 412, en regard de l'encoche 102 ménagée dans la fibre optique principale 100.

La collerette 422 possède un filetage 424 sur sa surface extérieure.

Pour permettre l'insertion du manchon 150 à l'intérieur du logement 412, le manchon 150 présentant une section de dimension supérieure à celle des orifices 418, 420, le carter cylindrique 410 peut être formé de deux coquilles assemblées par encliquetage, ou encore le carter 410 peut être moulé sur la périphérie du manchon 150.

L'embout 430 est formé d'un carter cylindrique obturé à une extrémité par une cloison transversale 432 munie d'un orifice 434 permettant le passage de la fibre auxiliaire 200.

L'embout 430 est muni sur sa surface interne d'un taraudage 436 apte à coopérer avec le filetage 424.

Les dimensions de l'embout 430 et de l'alésage 434 mont telles que la fibre auxiliaire 200 dont l'extrémité est engagée dans l'embout 430 est libre de rotation par rapport à ce dernier.

Il en est de même des bouchons 300 lorsque ceux-ci sont introduits dans un embout 430 comme illustré sur la figure 8B.

Pour utiliser les moyens supports 400 précédemment décrits et représentés sur les figures 8A et 8B afin de dériver une partie de l'énergie véhiculée dans une fibre principale 100 vers une fibre auxiliaire 200, il convient de procéder comme suit.

Une embase 410 est placée sur un manchon 150, l'encoche 102 réalisée dans la fibre optique 100 étant dirigée vers l'ouverture de la collerette 422.

Par ailleurs, l'extrémité en coin d'une fibre auxiliaire 200 et le manchon 250 associé sont introduits dans un embout 430.

L'embout 430 est alors vissé sur la collerette 422 grâce aux filetages complémentaires 424 et 436.

Au cours de cet assemblage, l'extrémité en coin de la fibre optique auxiliaire 200 vient s'encastrer dans l'encoche 102 de la fibre optique principale.

Bien entendu, au cours de cette opération, il convient de veiller à positionner correctement la face revêtue de l'extrémité en coin de la fibre optique auxiliaire 200 par rapport à la direction d'incidence des rayonnements introduits dans la fibre optique principale 100.

Bien entendu, les moyens d'assemblage par filetage de l'embase 410 et de l'embout 430 pourront être remplacés par tout moyen fonctionnellement équivalent.

Par ailleurs, comme cela apparaît à l'examen de la figure 8A, de préférence, un ressort 438 est intercalé entre la face transversale du manchon 250 opposée à l'extrémité en coin et la paroi transversale 432 de l'embout 430, pour solliciter l'extrémité en coin de la fibre optique auxiliaire 200 vers le fond de l'encoche 102 afin de garantir un contact intime entre les faces de l'encoche 102 et les faces de l'extrémité en coin de la fibre optique auxiliaire 200.

On notera que le ressort 438 est enfilé sur la fibre optique auxiliaire 200 et ainsi maintenu en place en toute sécurité.

On notera par ailleurs que, au cours de l'engagement, l'extrémité en coin de la fibre optique auxiliaire 200 est guidée au moment de la mise en place par l'entonnoir que forme le manchon polymère 150. Cette disposition permet à l'utilisateur un encastrement sûr de l'extrémité en coin de la fibre optique auxiliaire 200 dans l'encoche 102, sans précaution particulière.

Par contre, lorsqu'aucun élément auxiliaire 200 n'est utilisé, pour reconstituer la fibre optique principale 100, il convient d'utiliser un embout 430 équipé, comme représenté sur la figure 8B, d'un bouchon 300.

Dans un tel cas, il n'est plus nécessaire que la paroi transversale 432 soit ajourée.

Le bouchon 300 peut être maintenu à l'intérieur de l'embout 430 par tout moyen classique approprié.

Selon l'illustration représentée sur la figure 8B, le bouchon 300 est maintenu à l'intérieur de l'embout 430 par le ressort hélicoïdal 438 précité. Ce dernier est, de plus, guidé sur un ergot 440 ménagé sur la paroi transversale 432 précitée, en saillie vers l'ouverture de l'embout 430.

La mise en place du bouchon 300 dans l'encoche 102 de la fibre optique principale 100 est réalisée de façon identique à la mise en place de l'extrémité en coin de la fibre optique auxiliaire 200 précédemment décrite en regard de la figure 8A.

Là encore, il est nécessaire que, lors de la mise en place, le bouchon 300 soit libre de rotation par rapport à l'embout 430.

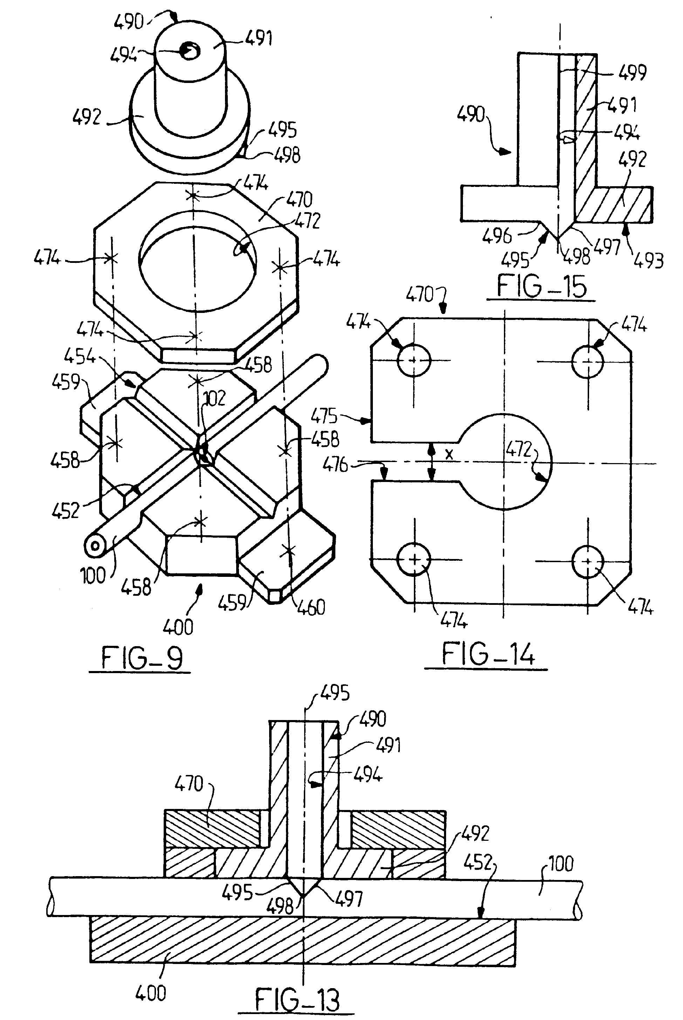

On va maintenant décrire la seconde variante de réalisation des moyens supports 400, représentée sur les figures 9 à 15.

Pour l'essentiel, ces moyens supports 400 comprennent une embase 450, un couvercle 470 et un embout 490.

L'embase 450 comprend deux rainures orthogonales 452, 454 débouchant sur une face commune 451 de l'embase 450.

Les deux rainures 452, 454 possèdent des profondeurs différentes.

La rainure a plus profonde 452 est destinée à recevoir la fibre optique principale 100.

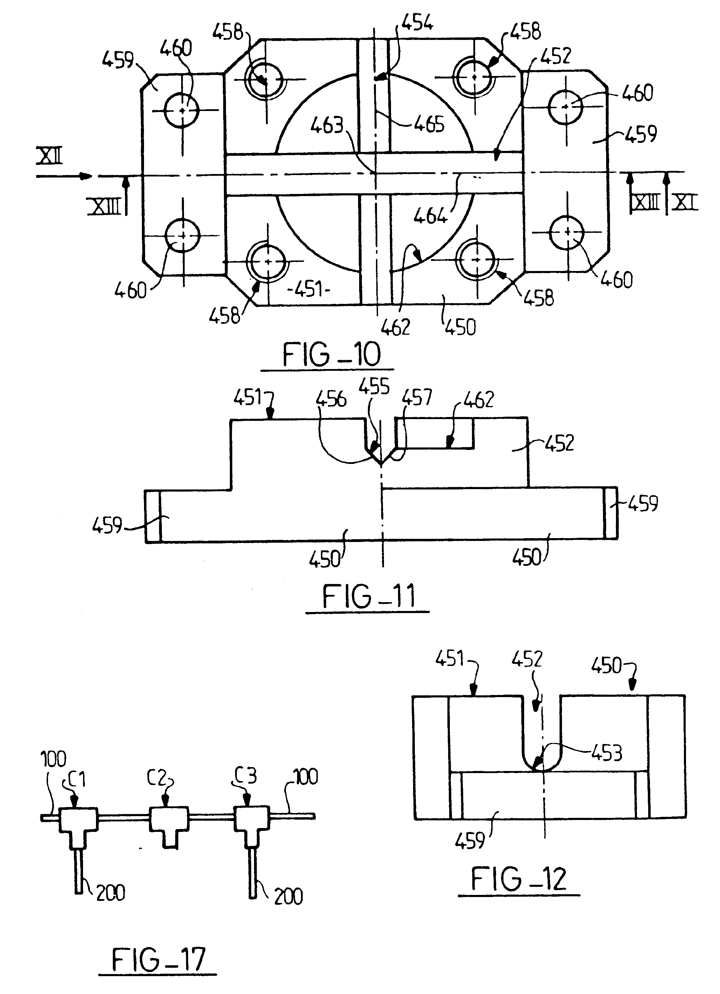

Comme cela apparaît à l'examen de la figure 12, le fond 453 de la rainure 452 est hémi-cylindrique et complémentaire de la périphérie extérieure de la fibre optique principale 100.

Le fond 455 de la seconde rainure 454 présente, comme illustré sur la figure 11, une section droite en V correspondant à la section droite de l'encoche 102, considérée dans un plan parallèle à l'axe 110 de la fibre optique principale 100.

La profondeur des rainures 452 et 454 est déterminée de telle sorte que lorsque la fibre optique principale 100 repose contre le fond 453 de la rainure 452, les faces planes en V du fond 455 de la rainure 454 coïncident avec les faces planes 104 et 106 de l'encoche 102.

Ainsi, le fond 455 de cette rainure 454 peut servir de guide à un outil pour l'usinage de l'encoche 102.

Sur les figures, les faces inclinées du fond 455 de la rainure 454 sont référencées 456 et 457.

L'embase 450 est, de plus, munie d'orifices 458 s'étendant perpendiculairement à la face 451 précitée de l'embase, pour la fixation du couvercle 470, comme cela sera décrit par la suite.

Enfin, l'embase 450 est munie de pattes latérales 459 munies d'alésages 460 pour la fixation du coupleur optique.

L'embout 490 est formé d'un manchon cylindrique 491 pourvu à une extrémité d'une nervure annulaire périphérique 492.

Cette dernière est adaptée pour venir se loger dans une cavité cylindrique 462 ménagée sur la face 451 précitée de l'embase 450, en position centrale par rapport à l'intersection, référencée 463 sur la figure 10, des plans de symétrie 464 et 465 des rainures 452 et 454.

L'embout 490 est muni d'un alésage traversant, longitudinal, central, 494.

L'alésage 494 est coaxial au manchon 491.

L'axe du manchon 491 et de l'alésage 494 est référencé 499 sur les figures.

L'embout 490 est, de plus, muni sur sa face transversale 493 adjacente à la nervure 492 d'une moulure en saillie 495 de section droite en V.

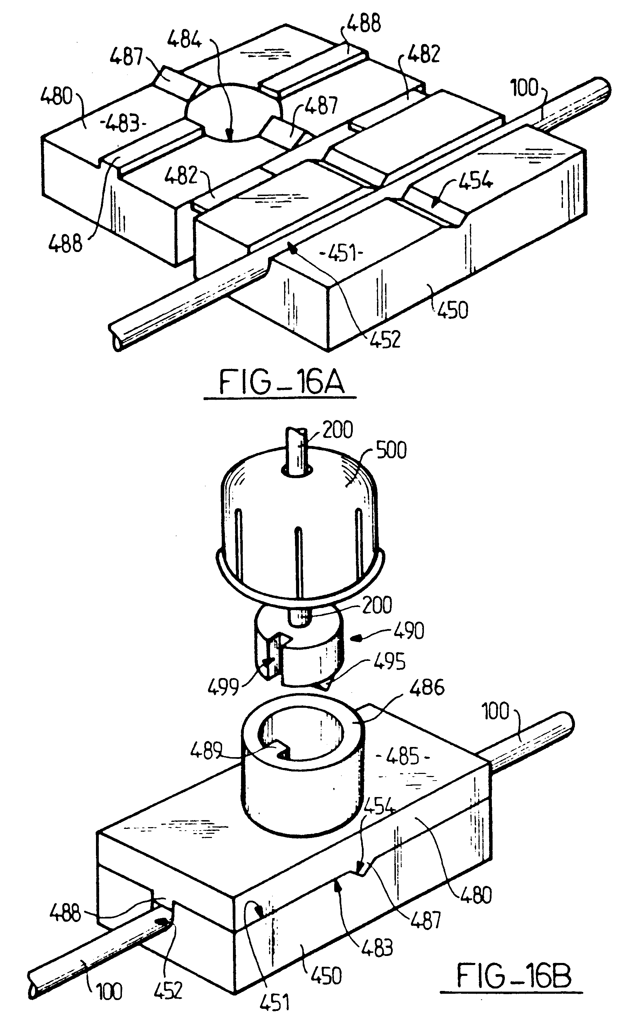

Les faces inclinées de cette moulure 495 sont référencées 496 et 497 sur la figure 15.

L'inclinaison relative entre les faces 496 et 497 précitées correspond à l'ouverture angulaire du fond de la rainure 454 et de l'encoche 102 réalisée dans la fibre optique principale 100.

Ainsi, de préférence, l'inclinaison relative entre les faces 496 et 497 de la moulure 495 est de l'ordre de 80 à 90°.

Le sommet 498 de la moulure 495, qui coïncide à la ligne d'intersection entre les faces 496 et 497 précitées, est sécant de l'axe 499 de l'embout 490.

L'alésage 494 est adapté pour recevoir, soit une fibre optique auxiliaire 200 possédant une extrémité en coin complémentaire de l'encoche 102, soit un bouchon 300 complémentaire de cette dernière.

Comme cela est illustré sur la figure 13, l'embout 490 équipé soit d'une fibre optique auxiliaire 200, soit d'un bouchon 300, est maintenu en place sur l'embase 450 à l'aide d'un couvercle 470.

Ce dernier possède un alésage central 472 dont la section droite est au moins légèrement supérieure à la section droite du manchon 491, mais nettement inférieure à la section droite de la nervure 492.

Le couvercle 470 est, par ailleurs, muni d'une pluralité d'orifices 474 dont la disposition coïncide avec la disposition des alésages 458 précités pour recevoir tout moyen de fixation approprié, tel que des vis.

De préférence, l'alésage central 472 du couvercle 470 débouche sur l'une des faces latérales 475 de ce dernier grâce à une découpe 476 dont la largeur x est au moins légèrement supérieure au diamètre de la fibre optique auxiliaire 200 tout en étant inférieure au diamètre du manchon 491.

L'homme de l'art comprendra aisément que cette découpe 476 permet de placer le couvercle sur l'embout 490, en entourant quasi totalement la fibre optique auxiliaire 200 et le manchon 491, sans avoir à engager le couvercle 470 sur la fibre optique auxiliaire 200 avant de placer cette dernière dans l'embout 490.

L'utilisation des moyens supports 400 représentés sur les figures 9 à 15 est faite comme suit.

Dans un premier temps, il convient de placer une fibre optique principale 100 dans la rainure 452 de l'embase 450.

Si la fibre optique principale est préalablement munie de l'encoche 102, il convient de veiller à ce que cette dernière coïncide avec les faces planes inclinées 456 et 457 du fond 455 de la rainure 454.

Par contre, si la fibre optique principale 100 n'est pas munie préalablement de l'encoche 102, cette dernière peut être réalisée à l'aide d'un outil de coupe prenant appui sur les faces planes inclinées 456, 457 précitées.

La fibre optique principale 100 peut être collée sur le fond 453 de la rainure 452.

Pour dériver une partie de l'information optique guidée dans la fibre optique principale 100 vers une fibre optique auxiliaire 200, il convient de placer celle-ci dans un embout 490, les faces planes inclinées 204, 206 de l'extrémité en coin de la fibre optique auxiliaire 200 venant en coïncidence avec les faces planes inclinées 496 et 497 de la moulure 495.

L'embout 490 est alors placé sur l'embase 450, la nervure 492 étant logée dans la cavité 462.

Le couvercle 470 est engagé sur l'embout 490 et fixé sur l'embase grâce à des moyens filetés ou équivalents engagés dans les alésages 458 et 474.

On remarquera que la moulure 495 qui prend position dans la rainure 454, là encore, facilite l'engagement de l'extrémité en coin de la fibre optique auxiliaire 200 dans l'encoche 102 de la fibre optique principale.

Pour reconstituer par contre la fibre optique principale 100, il convient d'utiliser un embout 490 similaire à celui précédemment décrit, mais équipé non point d'une fibre optique auxiliaire 200, mais d'un bouchon 300, dont les faces planes inclinées coïncident avec les faces planes inclinées 496 et 497 de la moulure 495.

On va maintenant décrire la structure des moyens supports 400 représentés sur les figures 16A et 16B conformes à une troisième variante de réalisation de la présente invention.

Là encore, on retrouve une embase 450 munie de deux rainures orthogonales 452 et 454 débouchant sur une face commune 451 de l'embase 450.

La rainure 452, la plus profonde, est destinée à recevoir une fibre optique principale 100.

Le fond de la seconde rainure 454 présente une section droite en V qui coïncide avec les faces inclinées de l'encoche 102 réalisée dans la fibre optique principale 100 .

Néanmoins, selon cette troisième variante de réalisation, le couvercle 480 est solidaire de l'embase 450 et articulé sur celle-ci par des languettes élastiques venues de moulage 482.

Le pliage de ces languettes 482 permet de juxtaposer la face 451 précitée de l'embase 450 et une face 483 qui lui est initialement coplanaire du couvercle 480.

Le couvercle 480 possède, de plus, un alésage 484 traversant d'extension perpendiculaire à la face 483 et centré, après juxtaposition des faces 483 et 451, sur l'intersection des plans de symétrie des rainures 452 et 454.

De préférence, comme cela est illustré sur la figure 16B, le couvercle 480 est muni sur sa face 485 opposée à la face 483 d'un manchon en saillie 486 coaxial à l'alésage 484 et entourant celui-ci.

Le manchon 486 est destiné à recevoir un embout 490 généralement similaire à celui précédemment décrit.

De plus, le couvercle 480 est muni sur sa face 483 d'une moulure 487, en saillie, de section droite en V. Cette moulure 487 disposée de part et d'autre de l'alésage 484 est complémentaire de la rainure 454 et destinée à compléter celle-ci de part et d'autre de la rainure 452.

L'homme de l'art comprendra aisément que la moulure 487 et la rainure 454 permettent d'assurer un positionnement correct du manchon 486 par rapport à l'encoche 102 ménagée dans la fibre optique principale 100, et de là un positionnement correct et un guidage précis de l'extrémité en coin d'une fibre auxiliaire 200 ou d'un bouchon 300 supporté dans l'embout 490 par rapport à l'encoche 102 de la fibre optique principale 100.

De plus, le couvercle 480 peut être muni sur sa face 483 d'une nervure rectiligne 488 orthogonale à la moulure 487 et destinée à venir reposer contre la fibre optique principale 100 pour immobiliser celle-ci dans la rainure 452.

Selon l'illustration donnée sur la figure 16A, la nervure 488 possède une section droite rectangulaire.

Le cas échéant, la surface supérieure de la nervure 488 peut être complémentaire de l'enveloppe de la fibre optique principale 100.

Comme cela apparait à l'examen de la figure 16B, de préférence, pour assurer une orientation correcte de la face revêtue de l'extrémité en coin de la fibre optique auxiliaire 200 ou du bouchon 300, par rapport à la direction d'incidence du rayonnaient, des moyens formant détrompeur sont prévus sur l'embout 490 et sur le manchon 486.

Selon l'illustration donnée sur cette figure 16B, ces moyens formant détrompeur sont formés d'une rainure longitudinale 499 ménagée sur la périphérie de l'embout 490 et d'une nervure 489 complémentaire ménagée sur la périphérie interne du manchon 486.

Un capuchon 500 recouvre de préférence l'embout 490 et le manchon 486 pour éviter la pénétration de poussière à l'intérieur du coupleur optique.

Là encore, l'embase 450 et le couvercle 480 peuvent recevoir des fibres optiques principales 100 préalablement munies de l'encoche 102, ou encore des fibres optiques principales 100 dépourvues initialement d'une telle encoche 102, cette dernière étant réalisée après collage de la fibre optique principale 100 dans la rainure 452, en prenant appui contre les faces planes inclinées du fond de la rainure 454.

Le couvercle 480 peut être fixé sur l'embase 450 à l'aide de tout moyen classique approprié, tel que par encliquetage, vissage ou équivalent.

De préférence, des languettes,non prévues sur les figures 16A et 16b pour simplifier l'illustration, sont solidaires de l'embase 450 et/ou du couvercle 480 en vue d'une fixation murale ou équivalent.

Bien entendu, la présente invention n'est aucunement limitée aux modes de réalisation qui viennent d'être décrits, mais s'étend à toute variante conforme à ses revendications.

On a représenté schématiquement sur la figure 17 un bus optique conforme à la présente invention muni d'une pluralité de coupleurs C du type précédemment décrit.

Plus précisément, sur la figure 17, la fibre optique'principale étant référencée 100, on a représenté deux coupleurs optiques C latéraux $C_1$, $C_3$, recevant des fibres optiques auxiliaires 200 pour assurer une dérivation partielle de l'information optique guidée dans la fibre optique principale 100, et un coupleur optique central $C_2$ muni d'un bouchon 300 pour reconstituer la fibre optique principale 100.

Jusqu'à présent dans la description, il a été indiqué que l'encoche 102 de la fibre optique principale doit être totalement remplie, soit par l'extrémité en biseau de la fibre optique auxiliaire 200, soit par le bouchon 300, avec dépôt de couches réfléchissantes ou partiellement réfléchissantes sur l'une au moins des surfaces 204, 206 du coin 202. Néanmoins, une version alternative de l'invention décrite, propose d'obtenir la réflextion de la lumière de la fibre principale 100 vers la fibre auxiliaire 200 par les dispositions constructives suivantes : au lieu de prévoir le dépôt d'une matière réfléchissante ou partiellement réfléchissante sur la face 206 de la fibre 200, cette dernière est taillée de manière à ce que l'interface 106-206 présente un espace (en forme de coin par exemple) rempli d'air ou d'une autre matière d'indice faible. La différence d'indice ainsi obtenue réalise la fonction dérivation de la lumière vers la fibre auxiliaire de manière équivalente à la surface réfléchissante. Par contre, les dispositions relatives au bouchon 300 doivent rester inchangées, c'est-à-dire que le bouchon doit remplir totalement l'espace fourni par l'encoche sans présence d'air aux interfaces.

**Revendications**

1. Coupleur optique en Té du type comprenant :
– une fibre optique principale (100) qui possède une encoche (102) généralement perpendiculaire à son axe (110), et laquelle encoche présente au moins une surface (104, 106) inclinée par rapport à un plan perpendiculaire à cet axe, et
– un élément optique auxiliaire (200) comportant une extrémité en coin (202) dont la forme lui permet de venir se loger dans l'encoche (102), l'une des surfaces de l'extrémité en coin (202) étant conçue de manière à permettre la dérivation d'une partie de l'information optique guidée dans la fibre optique principale (100) vers cet élement auxiliaire (200) caractérisé par le fait que ledit coupleur comprend :
– un bouchon (300) complémentaire de l'encoche (102) qui remplit totalement l'encoche et réalisé dans un matériau dont les caractéristiques optiques sont au moins très proches de celles de la fibre optique principale (100) pour reconstituer la fibre optique principale afin d'assurer le guidage de l'information optique dans celle-ci
– des moyens supports (400) associés à la fibre optique principale et adaptés pour recevoir ledit élément optique auxiliaire ou ledit bouchon
2. Coupleur selon la revendication 1, caractérisé en ce que pour permettre la dérivation d'une partie de l'information optique guidée, au moins une surface (204, 206) de l'extrémité en coin (202) de la fibre auxiliaire (200) est revêtue d'un matériau réfléchissant ou partiellement réfléchissant.
3. Coupleur selon la revendication 1, caractérisé en ce que, pour permettre la dérivation d'une partie de l'information optique guidée, l'une des surfaces (204, 206) de l'extrémité en coin (202) de la fibre auxiliaire (200)est dimensionnée de telle sorte qu'après logement de cette extrémité en coin (202) dans l'encoche (102), un espace rempli d'air ou d'une autre matière d'indice faible existe entre ladite surface d'extrémité et la surface en vis à vis de l'encoche.
4. Coupleur optique selon l'une des revendications 1 à 3, caractérisé par le fait que le bouchon (300) est réalisé dans le même matériau que la fibre optique principale.
5. Coupleur optique selon l'une des revendications 1 à 4, caractérisé par le fait que l'élément auxiliaire (200) et le bouchon (300) sont réalisés dans une fibre identique à la fibre optique principale (100), c'est-à-dire présentant le même indice de coeur, le même indice de gaine et le même diamètre.
6. Coupleur optique selon l'une des revendications 1 à 5, caractérisé par le fait que l'angle d'ouverture (α) de l'encoche (102) réalisée dans la fibre optique principale (100) est de l'ordre de 80° à 90°.
7. Coupleur optique selon l'une des revendications 1 à 6, caractérisé par le fait que, avant engagement, l'angle d'ouverture (α) de l'encoche (102) est inférieur à l'angle au sommet de la portion complémentaire (202) de l'élément auxiliaire (200) ou du bouchon (300).
8. Coupleur optique selon l'une des revendications 1 à 7, caractérisé par le fait que, avant engagement, l'angle d'ouverture (α) de l'encoche (102) est de l'ordre de 80°, tandis que l'angle au sommet de la portion complémentaire (202) de l'élément auxillaire (200) ou du bouchon (300) est de l'ordre de 9C°.
9. Coupleur optique selon l'une des revendications 1 à 8, caractérisé par le fait que l'extrémité en forme de coin (202) de l'élément auxiliaire (200) complémentaire de l'encoche (102) est munie sur ses deux faces (204, 206) de revêtements réfléchissants ou semi-réfléchissants présentant des caractéristiques optiques différentes.
10. Coupleur optique selon l'une des revendications 1 à 9, caractérisé par le fait que la profondeur de l'encoche (102) est inférieure à 0, 4 mm.
11. Coupleur optique selon l'une des revendications 1 à 10, caractérisé par le fait que l'encoche (102) est réalisée par enlèvement d'un élément de matière en forme de coin dans la fibre optique principale (100) à l'aide d'un outil d'usinage, tel que lime, meule ou couteau.
12. Coupleur optique selon l'une des revendications 1 à 11, caractérisé par le fait qu'une goutte de liquide adaptateur d'indice est introduite dans l'encoche.
13. Coupleur optique selon l'une des revendications 1 à 12, caractérisé par le fait que le bouchon (300) est réalisé, par exemple par moulage, en résine optique.
14. Coupleur optique selon l'une des revendications 1 à 12, caractérisé par le fait que le bouchon (300) est taillé dans une fibre optique plastique.
15. Coupleur optique melon l'une des revendications 1 à 12, caractérisé par le fait que le bouchon (300) est en matériau élastomère et taillé ou moulé.
16. Coupleur optique selon l'une des revendications 1 à 15, caractérisé par le fait que la bouchon (300) est muni d'une surface réfléchissante sur l'extérieur de l'encoche.
17. Coupleur optique selon l'une des revendications 1 à 16, caractérisé par le fait que les moyens supports (400) comprennent une embase (410) munie d'un logement (412) apte à recevoir la fibre optique principale (100), et un embout (430) qui reçoit l'élément optique auxiliaire (200) ou le bouchon (300) et est adapté pour être fixé sur l'embase.

18. Coupleur optique selon la revendication 17, caractérisé par le fait que la fibre optique auxiliaire (200) ou le bouchon (300) est libre de rotation par rapport à l'embout (430) et par le fait que cet embout (430) est adapté pour être assemblé par filetage (424 ; 436) sur l'embase (410).

19. Coupleur optique selon l'une des revendications 1 à 18, caractérisé par le fait que les moyens supports (400) comportent un ressort (438) sollicitant l'extrémité en coin de l'élément auxiliaire (200) ou du bouchon (300) vers le fond de l'encoche (102).

20. Coupleur optique selon l'une des revendications 1 à 16, caractérisé par le fait que les moyens supports (400) comprennent une embase (450) munie de deux rainures transversales (452, 454) débouchant sur une surface commune (410), la première (452) recevant la fibre optique principale (100), la seconde (454) coincidant avec l'encoche (102), et un couvercle (470) adapté pour être fixé sur l'embase et immobiliser l'extrémité en coin de l'élément optique auxiliaire (200) ou du bouchon (300) dans l'encoche (102).

21. Coupleur optique selon la revendication 20, caractérisé par le fait que le couvercle (470) possède une moulure en V (495) destinée à pénétrer dans la seconde rainure (454) de l'embase pour guider l'extrémité en coin de l'élément optique auxiliaire (200) ou du bouchon (300) dans l'encoche (102).

22. Coupleur optique selon l'une des revendications 20 ou 21, caractérisé par le fait que l'embase (450) et le couvercle (480) sont formés d'une pièce en étant reliés par des languettes d'articulation (482).

23. Bus optique muni d'une pluralité de coupleurs conformes à l'une des revendications 1 à 22.

24. Procédé de fabrication du coupleur selon l'une des revendications 1 à 23, caractérisé par le fait que l'encoche (102) est réalisée selon la séquence d'étapes consistant à :

i) enrober la fibre optique principale (100) dans un manchon (150) présentant au moins une surface extérieure de référence (151, 153),

ii) sectionner la fibre optique principale selon deux plans (152, 153) inclinés de 45° par rapport à son axe longitudinal (110) et symétriques par rapport à un plan transversal perpendiculaire à cet axe,

iii) sectionner transversalement (154) et à une distance égale choisie, les extrémités effilées des deux portions de fibre optique principale ainsi obtenues (160, 170), puis

iv) mettre bout à bout ces deux portions de fibre (160, 170) en accolant les plans de coupe (162, 172) résultant du sectionnement (154) obtenu à l'étape iii) et en disposant en regard les plans de coupe inclinés résultant des sectionnements (152, 153) obtenus à l'étape ii).

## Patentansprüche

1. T-förmige, optische Kupplung des Typs, der aufweist:

– eine optische Hauptfaser (100), die eine Kerbe (102) im allgemeinen senkrecht zu ihrer Achse (110) besitzt, wobei die Kerbe wenigstens eine bezüglich einer Ebene senkrecht zu dieser Achse geneigte Oberfläche (104, 106) aufweist, und

– ein optisches Hilfselement (200), das ein Ende in Eckform (202) aufweist, dessen Form ihm erlaubt, sich in die Kerbe (102) einzufügen, wobei eine der Oberflächen des Endes in Eckform (202) so ausgeführt ist, daß es die Ableitung eines Teils der durch die optische Hauptfaser (100) geführten Information zu diesem Hilfselement (200) ermöglicht, dadurch gekennzeichnet, daß die Kupplung umfaßt:

– einen zur Kerbe (102) komplementären Stopfen (300), der die Kerbe vollständig ausfüllt und aus einem Material hergestellt ist, dessen optischen Eigenschaften wenigstens sehr nahe denen der optischen Hauptfaser (100) sind, um die optische Hauptfaser nachzubilden, um die Führung der optischen Information in derselben sicherzustellen,

– Haltevorrichtungen (400), die mit der optischen Hauptfaser verbunden sind und die geeignet sind das optische Hilfselement oder den Stopfen aufzunehmen.

2. Kupplung nach Anspruch 1, dadurch gekennzeichnet, daß, um das Ableiten eines Teils der geführten optischen Information zu ermöglichen, wenigstens eine Oberfläche (204, 206) des Endes in Eckform (202) der Hilfsfaser (200) mit einem reflektierenden oder teilweise reflektierenden Material bedeckt ist.

3. Kupplung nach Anspruch 1, dadurch gekennzeichnet, daß, um das Ableiten eines Tells der geführten optischen Information zu ermöglichen, wenigstens eine Obrfläche (204, 206) des Endes in Eckform (202) der Hilfsfaser (200) so dimensioniert ist, daß nach dem Einfügen des Endes in Eckform (202) in der Kerbe (102) ein mit Luft oder einem anderen Material mit geringem Brechungsindex gefüllter Raum zwischen der Oberfläche des Endes und der Oberfläche gegenüber der Kerbe besteht.

4. Optische Kupplung nach einem der Ansprüche 1 bis 3, gekennzeichnet durch die Tatsache, daß der Stopfen (300) aus demselben Material besteht wie die optische Hauptfaser.

5. Optische Kupplung nach einem der Ansprüche 1 bis 4 gekennzeichnet durch die Tatsache, daß das Hilfselement (200) und der Stopfen (300) aus einer mit der optischen Hauptfaser (100) identischen Faser gefertigt sind, also denselben Kernindex, denselben Verstärkungsindex und denselben Durchmesser aufweisen.

6. Optische Kupplung nach einem der Ansprüche 1 bis 5 gekennzeichnet durch die Tatsache, daß der Öffnungswinkel (α) der in der optischen Hauptfaser (100) ausgeführten Kerbe (102) in der Ordnung von 80° bis 90° liegt.

7. Optische Kupplung nach einem der Ansprüche 1 bis 6 gekennzeichnet durch die Tatsache, daß vor dem Einrasten der Öffnungswinkel (α) der Kerbe (102) niedriger liegt als der Spitzenwinkel des komplementären Bereichs (202) des Hilfselements (200) oder des Stopfens (300).

8. Optische Kupplung nach einem der Ansprüche 1 bis 7 gekennzeichnet durch die Tatsache, daß vor dem Einrasten der Öffnungswinkel (α) der Kerbe (102) in der Größenordnung von 80° liegt, während der Spitzenwinkel des komplementären Bereichs (202) des Hilfselements (200) oder des Stopfens (300) in der Größenordnung von 90° liegt.

9. Optische Kupplung nach einem der Ansprüche 1 bis 8 gekennzeichnet durch die Tatsache, daß das Ende in Eckform (202) des Hilfselements, das zur Kerbe (102) komplementär ist, auf seinen beiden Seiten (204, 206) mit reflektierenden oder halbreflektierenden Beschichtungen versehen ist, die unterschiedliche optische Eigenschaften aufweisen.

10. Optische Kupplung nach einem der Ansprüche 1 bis 9 gekennzeichnet durch die Tatsache, daß die Tiefe der Kerbe (102) geringer als 0,4 mm ist.

11. Optische Kupplung nach einem der Ansprüche 1 bis 10 gekennzeichnet durch die Tatsache, daß die Kerbe (102) durch die Wegnahme von Material in Form einer Ecke aus der optischen Hauptfaser (100) mit Hilfe eines Werkzeugs zur spanabhebenden Bearbeitung, wie etwa einer Feile, einer Schleifscheibe oder einem Messer, hergestellt ist.

12. Optische Kupplung nach einem der Ansprüche 1 bis 11 gekennzeichnet durch die Tatsache, daß ein Tropfen einer Adapterindexflüssigkeit in die Kerbe eingeführt wird.

13. Optische Kupplung nach einem der Ansprüche 1 bis 12 gekennzeichnet durch die Tatsache, daß der Stopfen (300) zum beispiel durch Formgießen eines optischen Harzes hergestellt ist.

14. Optische Kupplung nach einem der Ansprüche 1 bis 12 gekennzeichnet durch die Tatsache, daß der Stopfen aus einer optische Plastikfaser geschnitten ist.

15. Optische Kupplung nach einem der Ansprüche 1 bis 12 gekennzeichnet durch die Tatsache, daß der Stopfen (300) aus einem Elastomer besteht und geschnitten oder formgegossen ist.

16. Optische Kupplung nach einem der Ansprüche 1 bis 15 gekennzeichnet durch die Tatsache, daß der Stopfen (300) mit einer reflektierenden Oberfläche auf der Außenseite der Kerbe versehen ist.

17. Optische Kupplung nach einem der Anspüche 1 bis 16 gekennzeichnet durch die Tatsache, daß die Haltevorrichtungen (400) eine Basis (410) aufweisen, die mit einer Halterung (412), die geeignet ist, die optische Hauptfaser (100) aufzunehmen, und einem Ansatzstück (430) versehen ist, das das optische Hilfselement (200) oder den Stopfen (300) aufnimmt und geeignet ist, auf der Basis befestigt zu werden.

18. Optische Kupplung nach Anspruch 17, gekennzeichnet durch die Tatsache, daß die optische Hilfsfaser (200) oder der Stopfen (300) frei drehbar bezüglich dem Ansatzstück (430) ist, und durch die Tatsache, daß dieses Ansatzstück (430) geeignet ist, durch Schraubung (424, 436) auf der Basis (410) montiert zu werden.

19. Optische Kupplung nach einem der Ansprüche 1 bis 18 gekennzeichnet durch die Tatsache, daß die Haltevorrichtungen (44) eine Feder (438) aufweisen, die das Ende in Eckform des Hilfselements (200) oder des Stopfens (300) gegen den Boden der Kerbe (102) drücken.

20. Optische Kupplung nach einem der Ansprüche 1 bis 16 gekennzeichnet durch die Tatsache, daß die Befestigungsvorrichtungen (400) eine Basis (450), die mit zwei transversalen Rillen (452, 454) versehen ist, die auf einer gemeinsamen Oberfläche (410) enden, wobei die erste (452) die optische Hauptfaser (100) aufnimmt und die zweite (454) mit der kerbe (102) zusasemmenfällt, und eine Abdeckung (470) aufweist, die geeignet ist, auf der Basis befestigt zu werden und das Ende in Eckform des optischen Hilfselements (200) oder des Stopfens (300) in der kerbe (102) ubeweglich zu machen.

21. Optische Kupplung nach Anspruch 20, gekennzeichnet durch die Tatsache, daß die Abdeckung (470) einen V-förmigen Steg (495) aufweist, der geeignet ist, in die zweite Rille (454) der Basis einzudringen, um das Ende in Eckform des optischen Hilfselements (200) oder des Stopfens (300) in die Kerbe (102) zu führen.

22. Optische Kupplung nach einem der Ansprüche 20 oder 21, gekennzeichet durch die Tatsache, daß die Basis (450) und die Abdeckung (480) aus einem Stück gebildet sind, indem sie durch Gelenkzungen (482) verbunden sind.

23. Optischer Bus, der mit einer Mehrzahl von Kupplungen nach einem der Ansprüche 1 bis 22 versehen ist.

24. Verfahren zur Herstellung der Kupplung nach einem der Ansprüche 1 bis 23, gekennzeichnet durch die Tatsache, daß die Kerbe (102) entsprechend dem Ablauf der Verfahrensschritte hergestellt wird, der darin besteht:

i) die optische Hauptfaser (100) mit einer Manschette (150) zu verkleiden, die wenigstens eine äußere Referenzoberfläche (151, 153) besitzt,

ii) die optische Hauptfaser entlang zweier Ebenen (152, 153) zu zerschneiden, die um 45° zur ihrer longitudinalen Achse geneigt sind und symmetrisch bezüglich einer transversalen Ebene senkrecht zu dieser Achse sind,

iii) transversal (154) und mit einem ausgewählten gleichen Abstand die zulaufenden Enden der beiden so erhaltenen beschnitte (160, 170) der optischen Hauptfaser zu schneiden, und dann

iv) diese beiden Faserabschnitte (160, 170) Ende an Ende zu legen, indem die Schnittebenen (162, 172), die aus dem in Schritt iii) durchgeführten Schneiden (154) erhalten wurden, aneinandergefügt werden und die geneigten Schnittebenen, die aus den Schnitten (152, 153) aus Schritt ii) resultieren, einander gegenüber angeordnet werden.

## Claims

1. An optical tee coupler of the type comprising :
– a main optical fiber (100) having a notch (102) extending generally perpendicularly to its axis (110) and including at least one surface (104,106) which is inclined relative to a plane perpendicular to said axis; and
– an auxiliary optical component (200) including a wedge-shaped end (202) having a form suitable for being received in the notch (102), with one of the surfaces of the wedge-shaped end (202) being designed in such a manner as to enable a portion of the optical information guided among the main optical fiber (100) to bee diverted into said auxiliary component (200); characterised in that said coupler comprises :
– a plug (300) complementary in shape to the notch (102), suitable for completely filling the notch, and made of a substance whose optical characteristics are at least very close to those of the main optical fiber (100) in order to reconstitute the main optical fiber so as to ensure that optical information is guided there-among.
– support means (400) associated with the main optical fiber and adapted to receive said auxiliary optical component or said plug.

2. A coupler according to claim 1, characterized in that to divert a portion of the guided optical information, at least one surface (204,206) of the wedge-shaped end (202) of the auxiliary fiber (200) is coated with a reflecting or a partially reflecting material.

3. A coupler according to claim 1, characterized in that in order to divert a portion of the guided optical information, one of the surfaces (204,206) of the wedge-shaped end (202) of the auxiliary fiber (200) is of dimensions such that after said wedge-shaped end (202) has been received in the notch (102), a space filmed with air or some other low-refractive index substance exists between said end surface and the facing surface of the notch.

4. An optical coupler according one of claims 1 to 3, characterized in that the plug (300) is made of the same material as the main optical fiber.

5. An optical coupler according to one of claims 1 to 4, characterized in that the auxiliary component (200) and the plug (300) are both made of fiber identical to that used for the main optical fiber (100), i.e. fiber having the same core index, the same cladding index, and the same diameter.

6. An optical coupler according to one of claims 1 to 5, characterized in that the dihedral angle ($\alpha$) of the notch (102) in the main optical fiber (100) is about 80° to 90°.

7. An optical coupler according to one of claims 1 to 6, characterized in that prior to engagement, the dihedral angle ($\alpha$) of the notch (102) is less than the dihedral angle of the complementary portion (202) of the auxiliary component (200) or of the plug (300).

8. An optical coupler according to one of claims 1 to 7, characterized in that prior to engagement, the dihedral angle ($\alpha$) of the notch (102) is about 80°, while the dihedral angle of the complementary portion (202) of the auxiliary component (200) or of the plug (300) is about 90°.

9. An optical coupler according to one of claims 1 to 8, characterized in that the wedge-shaped end (202) of the ayxiliary component (200) complementary to the notch (102) is provided on both faces (204,206) with reflecting or semi-reflecting coatings having different optical characteristics.

10. An optical coupler according to one of claims 1 to 9, characterized in that the depth of the notch (102) is less than 0.4 mm.

11. An optical coupler according to one of claims 1 to 10, characterized in that the notch (102) is made by removing a wedge-shaped piece from the main optical fiber (100) by means of a machining tool such as a file, a grindstone or a knife.

12. An optical coupler according to one of claims 1 to 11, characterized in that a drop of index-matching liquid is inserted into the notch.

13. An optical coupler according to one of claims 1 to 12, characterized in that the plug (300) is made of optical resin, e.g. by molding.

14. An optical coupler according to one of claims 1 to 12, characterized in that the plug (300) is cut from a plastic optical fiber.

15. An optical coupler according to one of claims 1 to 12, characterized in that the plug (300) is made of elastomer material, by cutting or by molding.

16. An optical coupler according to one of claims 1 to 15, characterized in that the plug (300) is provided with a reflecting surface outside the notch.

17. An optical coupler according to one of claims 1 to 16, characterized in that the support means (400) comprise a base (410) including a housing (412) suitable for receiving the main optical fiber (100) and an end fitting (430) for receiving the auxiliary optical component (200) or the plug (300) and adapted to be fixed to the base.

18. An optical coupler according to claim 17, wherein the auxiliary optical fiber (200) or the plug (300) is free to rotate relative to the end fitting (430), thereby enabling the end fitting (430) to be assembled to the base (410) by screw thread means (424;436).

19. An optical coupler according to one of claims 1 to 18, characterized in that the support means (400) include a spring (438) urging the wedge-shaped end of the auxiliary component (200) or the plug (300) towards the bottom of the notch (102).

20. An optical coupler according to one of claims 1 to 16, characterized in that the support means (400) comprise a base (450) fitted with two transverse grooves (452,454) formed in a common surface (410), the first groove (452) receiving the main optical fiber (100) and the second groove (454) coinciding with the notch (102) therein, together with a cover (470) suitable for being fixed on the base and for holding the wedge-shaped end of the auxiliary optical component (200) or of the plug (300) in the notch (102).

21. An optical coupler according to claim 20, wherein the cover (470) includes a V-shaped projection (495) suitable for penetrating into the second groove (454) of the base in order to guide the wedge-shaped end of the auxiliary optical component (200) or of the plug (300) in the notch (102).

22. An optical coupler according to claim 20 or 21 wherein the base (450) and the cover (480) are formed as a one-piece item and are interconnected by flexible hinge tongues (482).

23. An optical bus fitted with a plurality of couplers according to one of claims 1 to 22.

24. A method of fabrication the coupler according to one of claims 1 to 23, characterized in that said notch (102) is made according to the following sequence of steps :

i) covering the main optical fiber (100) with a sleeve (150) having at least one external reference surface (151,153) ,

ii) cutting the main optical fiber along two planes (152,153) inclined at 45° relative to its longitudinal axis (110) and symmetrical about a transverse plane perpendicular to said axis;

iii) cutting (154) the tapering ends of both of the resulting optical fiber portions (160,170) transversely at a selected equal distance from the tips thereof; then

iv) placing said fiber portions (160,170) end-to-end with the section planes (162,172) obtained during step iii) being put into contact with each other and with the sloping section planes obtained during step ii) being disposed to face each other.

FIG_1

FIG_2

FIG_3A

FIG_3B

FIG_4A

FIG_4B

FIG_4C

FIG_5

FIG_6

FIG _ 7A

FIG _ 7B

FIG _ 7C

FIG _ 7D

FIG-8A

FIG-8B

FIG_9

FIG_15

FIG_14

FIG_13

FIG _10

FIG _11

FIG _17

FIG _12

FIG_16A

FIG_16B